# EUROPEAN PATENT APPLICATION

(11) **EP 4 546 851 A1**
(43) Date of publication of application: **30.04.2025**
(21) Application number: 23849109.6
(22) Date of filing: 29.06.2023
(51) Int. Cl.: H04W 24/02

(54) **COMMUNICATION METHOD AND APPARATUS**

(30) Priority: 01.08.2022 CN 202210917525
(71) Applicant: Huawei Technologies Co., Ltd., Shenzhen, Guangdong 518129 (CN)
(72) Inventor: CAO, Wei, Shenzhen, Guangdong 518129 (CN); YUAN, Shitong, Shenzhen, Guangdong 518129 (CN); LIU, Fengwei, Shenzhen, Guangdong 518129 (CN); LI, Fang, Shenzhen, Guangdong 518129 (CN); FAN, Bo, Shenzhen, Guangdong 518129 (CN)
(74) Representative: Körber, Martin Hans
(86) International application number: PCT/CN2023/103703
(87) International publication number: WO 2024/027399

(57) **Abstract**

This application provides a communication method and apparatus. The method includes: A network device sends first configuration information to a terminal device, where the first configuration information is used to configure that the terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information includes N information groups, an n^{th} information group in the N information groups includes a measurement result of an n^{th} reference signal and/or an identifier of a resource corresponding to the n^{th} reference signal, N is an integer greater than or equal to 1, and n∈[1, N]. In embodiments of this application, the network device configures, for the terminal device, a reporting quantity for reporting measurement information of a reference signal, so that the network device can obtain more accurate, reliable, and comprehensive training data, to improve accuracy of an AI model.

## Description

This application claims priority to Chinese Patent Application No. 202210917525.6, filed with the China National Intellectual Property Administration on August 1, 2022 and entitled "COMMUNICATION METHOD AND APPARATUS", which is incorporated herein by reference in its entirety.

### TECHNICAL FIELD

This application relates to the communication field, and more specifically, to a method and apparatus for reporting a beam measurement result.

### BACKGROUND

Currently, artificial intelligence (artificial intelligence, AI) is used for beam management, and AI may be used for beam prediction in time domain or space domain. A large amount of data needs to be collected for training an AI model. If the AI model is trained by a network device, the network device may perform training by collecting a measurement result reported by a terminal device.

In the conventional technology, the terminal device is supported in reporting a beam measurement result only at L1, a maximum of four or four groups of beam measurement results are reported each time, and there is a specific quantization error in the reported measurement result. In addition, for the measurement result reported by the terminal device, the network device does not know whether smoothing processing is performed on the result, timeliness of the measurement result, whether the terminal device performs measurement by using a wide beam or a narrow beam, whether the terminal device traverses all beams to perform measurement, and the like. All these affect training, verification, and inference of the AI model, and finally directly affect accuracy of beam inference. Moreover, when a beam failure occurs, the terminal device does not report, to the network device, some beam measurement results before and after the failure. However, there are usually some rules in the measurement results before and after the beam failure. This is critical to model training.

In this case, how to provide more accurate, reliable, and comprehensive training data for the network device to improve accuracy of the AI model is an urgent problem to be resolved in the industry.

### SUMMARY

This application provides a communication method, so that a network device can obtain more accurate, reliable, and comprehensive training data.

According to a first aspect, a communication method is provided, applied to a network device and including: sending first configuration information to a terminal device, where the first configuration information is used to configure that the terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information includes N information groups, an n^{th} information group in the N information groups includes a measurement result of an n^{th} reference signal and/or an identifier of a resource corresponding to the n^{th} reference signal, N is an integer greater than or equal to 1, and n∈[1, N]; and receiving the feedback information based on the first configuration information.

In this embodiment of this application, the network device configures, for the terminal device, a reporting quantity for reporting measurement information of a reference signal, so that the network device can obtain required data more flexibly and accurately, to improve operating efficiency and operating quality of the network device. Specifically, in this embodiment of this application, the network device can obtain more accurate, reliable, and comprehensive training data, to improve accuracy of an AI model.

It should be noted that, in this embodiment of this application, the quantity N of reference signals described in each piece of feedback information may be the same or may be different. This is not limited in this application.

In a possible implementation, the network device further configures, for the terminal device, a resource for reporting the feedback information. It should be noted that in this embodiment of this application, the feedback information may be sent by using an L3 resource. Because the L3 resource is more abundant than an L1 resource in an existing protocol, content in the feedback information may be more comprehensive and accurate than that in the existing protocol. For example, the measurement result in this embodiment of this application may more accurately reflect an actual measurement result of the terminal device.

With reference to the first aspect, in some implementations of the first aspect, the n^{th} information group in the N information groups further includes: a first measurement parameter of the n^{th} reference signal, where the first measurement parameter is used to describe a terminal state of the terminal device during measurement of the n^{th} reference signal, the first measurement parameter includes at least one of receive beam information for measuring the n^{th} reference signal by the terminal device, receive panel information for measuring the n^{th} reference signal by the terminal device, and a scenario identifier for measuring the n^{th} reference signal by the terminal device, and the scenario identifier is used to describe a rotation state and/or a displacement state of the terminal device during the measurement of the reference signal.

In this embodiment of this application, content reported by the terminal device further includes the measurement parameter of the reference signal, so that the network device can obtain more accurate, reliable, and comprehensive training data, to improve accuracy of an AI model.

With reference to the first aspect, in some implementations of the first aspect, the n^{th} information group in the N information groups further includes: a first time of the n^{th} reference signal, where the first time is used to describe a time at which the terminal device measures the n^{th} reference signal, and the first time includes at least one of a slot index, a combination of a frame index and a slot index, and a quantity of slots or a quantity of frames between a time at which first feedback information is sent and the measurement time.

In this embodiment of this application, content reported by the terminal device further includes the measurement time of the reference signal, so that the network device can obtain more accurate, reliable, and comprehensive training data, to improve accuracy of an AI model.

In a possible implementation, a valid time may be set, and only a measurement result within the valid time is retained. In this way, a data volume can be reduced, data redundancy can be avoided, and operating efficiency can be improved.

With reference to the first aspect, in some implementations of the first aspect, the measurement result of the n^{th} reference signal includes: received power of the n^{th} reference signal and/or a signal to interference plus noise ratio of the n^{th} reference signal.

In this embodiment of this application, the measurement result that may be reported by the terminal device to the network device may be the received power of the reference signal, to reflect quality of a resource (beam). Because reporting resources are more abundant, the reported measurement result may also be more accurate, to improve accuracy of an AI model.

With reference to the first aspect, in some implementations of the first aspect, the feedback information further includes: a second time of the resource set corresponding to the feedback information, where the second time is used to describe a time at which the terminal device starts and/or ends measurement of the resource set corresponding to the feedback information, and the second time includes at least one of a slot index, a combination of a frame index and a slot index, and a quantity of slots or a quantity of frames between the time at which the feedback information is sent and the measurement start and/or end time.

In this embodiment of this application, the time at which the measurement of the resource set corresponding to the feedback information starts and/or ends represents a measurement time of the N reference signals. This can reflect timeliness of the measurement result, reduce a size of the feedback information, and save resources.

With reference to the first aspect, in some implementations of the first aspect, the feedback information further includes: a first identifier, where the first identifier indicates a correspondence between the feedback information and the resource set, and the first identifier includes at least one of a resource set identifier, a reporting identifier corresponding to the resource set, and a trigger state identifier corresponding to the resource set.

In this embodiment of this application, the feedback information includes the first identifier, so that the network device can correspond reported data to the resource set. This improves comprehensiveness of data obtained by the network device, to improve accuracy of an AI model.

With reference to the first aspect, in some implementations of the first aspect, the method further includes: sending second configuration information to the terminal device, where the second configuration information is used to configure that the terminal device reports measurement information of a reference signal before and/or after a beam failure.

In a possible implementation, the measurement information of the reference signal before and/or after the beam failure may include: beam strength fluctuation information of a resource corresponding to the reference signal before and after the beam failure and/or deep fading frequency of the resource corresponding to the reference signal before and after the beam failure.

In this embodiment of this application, the terminal device is indicated to report the measurement information of the reference signal before and/or after the beam failure, so that the network device can obtain more comprehensive data. In addition, there are some rules in the measurement information of the reference signal before the beam failure and/or after the beam failure, so that a model can be better trained.

With reference to the first aspect, in some implementations of the first aspect, if a beam recovery request sent by the terminal device is received, the method further includes: sending trigger information to the terminal device, where the trigger information indicates the terminal device to report the measurement information of the reference signal before and/or after the beam failure.

In this embodiment of this application, the network device may obtain, by using the trigger information, the measurement information of the reference signal before and/or after the beam failure, to improve accuracy of an AI model.

With reference to the first aspect, in some implementations of the first aspect, the second configuration information further includes: at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device.

In this embodiment of this application, the measurement information of the reference signal before and/or after the beam failure is configured for the terminal device, so that the network device can obtain training data more flexibly and accurately, to improve efficiency of model training.

With reference to the first aspect, in some implementations of the first aspect, the trigger information further includes: at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device.

In this embodiment of this application, a parameter that needs to be reported by the terminal device is indicated, so that the network device can obtain training data more flexibly and accurately, to improve efficiency of model training.

With reference to the first aspect, in some implementations of the first aspect, the trigger information is beam recovery response information sent by the network device, or indication signaling separately sent by the network device, and the beam recovery response information includes a field indicating the terminal device to report the measurement information of the reference signal before and/or after the beam failure.

In this embodiment of this application, the trigger information is sent in a beam recovery procedure, so that signaling overheads can be reduced.

With reference to the first aspect, in some implementations of the first aspect, the measurement information of the reference signal before and/or after the beam failure includes: at least one of feedback information corresponding to a resource set corresponding to the reference signal before and/or after the beam failure, beam strength fluctuation information of a resource corresponding to the reference signal before and/or after the beam failure, and deep fading frequency of the resource corresponding to the reference signal before and/or after the beam failure.

In this embodiment of this application, the terminal device reports beam strength fluctuation information of a resource corresponding to the reference signal before and after the beam failure and/or deep fading frequency of the resource corresponding to the reference signal before and after the beam failure, so that the network device can obtain more comprehensive training data, to improve efficiency of model training.

According to a second aspect, a communication method is provided, applied to a terminal device and including: receiving first configuration information from a network device, where the first configuration information is used to configure that the terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information includes N information groups, an n^{th} information group in the N information groups includes a measurement result of an n^{th} reference signal and/or an identifier of a resource corresponding to the n^{th} reference signal, N is an integer greater than or equal to 1, and n∈[1, N]. The terminal device reports the one or more pieces of feedback information.

In this embodiment of this application, the terminal device reports the measurement information of the reference signal based on a reporting parameter configured by the network device, so that the terminal device can report required data more accurately, to improve communication efficiency and quality. Specifically, in this embodiment of this application, the terminal device can send more accurate, reliable, and comprehensive training data to the network device, to improve accuracy of an AI model.

It should be noted that, in this embodiment of this application, the quantity N of reference signals described in each piece of feedback information may be the same or may be different. This is not limited in this application.

In a possible implementation, the terminal device may send the feedback information on a reporting resource configured by the network device. It should be noted that in this embodiment of this application, the feedback information may be sent by using an L3 resource. Because the L3 resource is more abundant than the L1 resource in an existing protocol, content in the feedback information may be more comprehensive and accurate than that in the existing protocol. For example, the measurement result in this embodiment of this application may more accurately reflect an actual measurement result of the terminal device.

With reference to the second aspect, in some implementations of the second aspect, the n^{th} information group in the N information groups further includes: a first measurement parameter of the n^{th} reference signal, where the first measurement parameter is used to describe a state of the terminal device during measurement of the n^{th} reference signal, the first measurement parameter includes at least one of receive beam information for measuring the n^{th} reference signal by the terminal device, receive panel information for measuring the n^{th} reference signal by the terminal device, and a scenario identifier for measuring the n^{th} reference signal by the terminal device, and the scenario identifier is used to describe a rotation state and/or a displacement state of the terminal device during the measurement of the reference signal.

In this embodiment of this application, content reported by the terminal device further includes the measurement parameter of the reference signal, so that the network device can obtain more accurate, reliable, and comprehensive training data, to improve accuracy of an AI model.

With reference to the second aspect, in some implementations of the second aspect, the n^{th} information group in the N information groups further includes: a first time of the n^{th} reference signal, where the first time is used to describe a time at which the terminal device measures the n^{th} reference signal, and the first time includes at least one of a slot index, a combination of a frame index and a slot index, and a quantity of slots or a quantity of frames between a time at which first feedback information is sent and the measurement time.

In this embodiment of this application, content reported by the terminal device further includes the measurement time of the reference signal, so that the network device can obtain more accurate, reliable, and comprehensive training data, to improve accuracy of an AI model.

With reference to the second aspect, in some implementations of the second aspect, the measurement result of the n^{th} reference signal includes: received power of the n^{th} reference signal and/or a signal to interference plus noise ratio of the n^{th} reference signal.

In this embodiment of this application, the measurement result that may be reported by the terminal device to the network device may be the received power of the reference signal, to reflect quality of a resource (beam). Because reporting resources are more abundant, the reported measurement result may also be more accurate, to improve accuracy of an AI model.

With reference to the second aspect, in some implementations of the second aspect, the feedback information further includes: a second time of the resource set corresponding to the feedback information, where the second time is used to describe a time at which the terminal device starts and/or ends measurement of the resource set corresponding to the feedback information, and the second time includes at least one of a slot index, a combination of a frame index and a slot index, and a quantity of slots or a quantity of frames between the time at which the feedback information is sent and the measurement start and/or end time.

In this embodiment of this application, the time at which the measurement of the resource set corresponding to the feedback information starts and/or ends represents a measurement time of the N reference signals. This can reflect timeliness of the measurement result, reduce a size of the feedback information, and save resources.

With reference to the second aspect, in some implementations of the second aspect, the feedback information includes: a first identifier, where the first identifier indicates the resource set corresponding to the feedback information, and the first identifier includes at least one of a resource set identifier, a reporting identifier corresponding to the resource set, and a trigger state identifier corresponding to the resource set.

In this embodiment of this application, the feedback information includes the first identifier, so that the network device can correspond reported data to the resource set. This improves comprehensiveness of data obtained by the network device, to improve accuracy of an AI model.

With reference to the second aspect, in some implementations of the second aspect, the method further includes: receiving second configuration information from the network device, where the second configuration information is used to configure that the terminal device reports measurement information of a reference signal before and/or after a beam failure.

In this embodiment of this application, the terminal device is indicated to report the measurement information of the reference signal before and/or after the beam failure, so that the network device can obtain more comprehensive data. In addition, there are some rules in the measurement information of the reference signal before the beam failure and/or after the beam failure, so that a model can be better trained.

With reference to the second aspect, in some implementations of the second aspect, the method further includes: receiving trigger information from the network device, and reporting, to the network device, the measurement information of the reference signal before and/or after the beam failure.

In this embodiment of this application, after receiving the trigger information, the terminal device may send, to the network device, the measurement information of the reference signal before and/or after the beam failure, to improve accuracy of an AI model.

With reference to the second aspect, in some implementations of the second aspect, the second configuration information further includes: at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device.

In this embodiment of this application, the measurement information of the reference signal before and/or after the beam failure is configured for the terminal device, so that the network device can obtain training data more flexibly and accurately, to improve efficiency of model training.

With reference to the second aspect, in some implementations of the second aspect, the trigger information further includes: at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device.

In this embodiment of this application, a parameter that needs to be reported by the terminal device is indicated, so that the network device can obtain training data more flexibly and accurately, to improve efficiency of model training.

With reference to the second aspect, in some implementations of the second aspect, the measurement information of the reference signal before and/or after the beam failure includes: at least one of feedback information corresponding to a resource set corresponding to the reference signal before and/or after the beam failure, beam strength fluctuation information of a resource corresponding to the reference signal before and/or after the beam failure, and deep fading frequency of the resource corresponding to the reference signal before and/or after the beam failure.

In this embodiment of this application, the terminal device reports beam strength fluctuation information of a resource corresponding to the reference signal before and after the beam failure and/or deep fading frequency of the resource corresponding to the reference signal before and after the beam failure, so that the network device can obtain more comprehensive training data, to improve efficiency of model training.

According to a third aspect, a communication apparatus is provided, including a transceiver module. The transceiver module is configured to send first configuration information to a terminal device, where the first configuration information is used to configure that the terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information includes N information groups, an n^{th} information group in the N information groups includes a measurement result of an n^{th} reference signal and/or an identifier of a resource corresponding to the n^{th} reference signal, N is an integer greater than or equal to 1, and n∈[1, N]. The transceiver module is further configured to receive the feedback information based on the first configuration information.

With reference to the third aspect, in some implementations of the third aspect, the n^{th} information group in the N information groups further includes: a first measurement parameter of the n^{th} reference signal, where the first measurement parameter is used to describe a terminal state of the terminal device during measurement of the n^{th} reference signal, the first measurement parameter includes at least one of receive beam information for measuring the n^{th} reference signal by the terminal device, receive panel information for measuring the n^{th} reference signal by the terminal device, and a scenario identifier for measuring the n^{th} reference signal by the terminal device, and the scenario identifier is used to describe a rotation state and/or a displacement state of the terminal device during the measurement of the reference signal.

With reference to the third aspect, in some implementations of the third aspect, the n^{th} information group in the N information groups further includes: a first time of the n^{th} reference signal, where the first time is used to describe a time at which the terminal device measures the n^{th} reference signal, and the first time includes at least one of a slot index, a combination of a frame index and a slot index, and a quantity of slots or a quantity of frames between a time at which first feedback information is sent and the measurement time.

With reference to the third aspect, in some implementations of the third aspect, the measurement result of the n^{th} reference signal includes received power of the n^{th} reference signal and/or a signal to interference plus noise ratio of the n^{th} reference signal.

With reference to the third aspect, in some implementations of the third aspect, the feedback information further includes: a second time of the resource set corresponding to the feedback information, where the second time is used to describe a time at which the terminal starts and/or ends measurement of the resource set corresponding to the feedback information, and the second time includes at least one of a slot index, a combination of a frame index and a slot index, and a quantity of slots or a quantity of frames between the time at which the feedback information is sent and the measurement start and/or end time.

With reference to the third aspect, in some implementations of the third aspect, the feedback information includes: a first identifier, where the first identifier indicates a correspondence between the feedback information and the resource set, and the first identifier includes at least one of a resource set identifier, a reporting identifier corresponding to the resource set, and a trigger state identifier corresponding to the resource set.

With reference to the third aspect, in some implementations of the third aspect, the transceiver module is further configured to send second configuration information to the terminal device, where the second configuration information is used to configure that the terminal device reports measurement information of a reference signal before and/or after a beam failure.

With reference to the third aspect, in some implementations of the third aspect, if a beam recovery request sent by the terminal device is received, the transceiver module is further configured to send trigger information to the terminal device, where the trigger information indicates the terminal device to report the measurement information of the reference signal before and/or after the beam failure.

With reference to the third aspect, in some implementations of the third aspect, the second configuration information further includes: at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device.

With reference to the third aspect, in some implementations of the third aspect, the trigger information further includes: at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device.

With reference to the third aspect, in some implementations of the third aspect, the trigger information is beam recovery response information sent by a network device, or indication signaling separately sent by the network device, and the beam recovery response information includes a field indicating the terminal device to report the measurement information of the reference signal before and/or after the beam failure.

With reference to the third aspect, in some implementations of the third aspect, the measurement information of the reference signal before and/or after the beam failure includes: at least one of feedback information corresponding to a resource set corresponding to the reference signal before and/or after the beam failure, beam strength fluctuation information of a resource corresponding to the reference signal before and/or after the beam failure, and deep fading frequency of the resource corresponding to the reference signal before and/or after the beam failure.

According to a fourth aspect, a communication apparatus is provided, including a transceiver module and a processing module. The transceiver module is configured to receive first configuration information from a network device, where the first configuration information is used to configure that a terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information includes N information groups, an n^{th} information group in the N information groups includes a measurement result of an n^{th} reference signal and/or an identifier of a resource corresponding to the n^{th} reference signal, N is an integer greater than or equal to 1, and n∈[1, N]. The processing module is configured to obtain the one or more pieces of feedback information. The transceiver module is further configured to report the one or more pieces of feedback information.

With reference to the fourth aspect, in some implementations of the fourth aspect, the n^{th} information group in the N information groups further includes: a first measurement parameter of the n^{th} reference signal, where the first measurement parameter is used to describe a state of the terminal device during measurement of the n^{th} reference signal, the first measurement parameter includes at least one of receive beam information for measuring the n^{th} reference signal by the terminal device, receive panel information for measuring the n^{th} reference signal by the terminal device, and a scenario identifier for measuring the n^{th} reference signal by the terminal device, and the scenario identifier is used to describe a rotation state and/or a displacement state of the terminal device during the measurement of the reference signal.

With reference to the fourth aspect, in some implementations of the fourth aspect, the n^{th} information group in the N information groups further includes: a first time of the n^{th} reference signal, where the first time is used to describe a time at which the terminal device measures the n^{th} reference signal, and the first time includes at least one of a slot index, a combination of a frame index and a slot index, and a quantity of slots or a quantity of frames between a time at which first feedback information is sent and the measurement time.

With reference to the fourth aspect, in some implementations of the fourth aspect, the measurement result of the n^{th} reference signal includes received power of the n^{th} reference signal and/or a signal to interference plus noise ratio of the n^{th} reference signal.

With reference to the fourth aspect, in some implementations of the fourth aspect, the feedback information further includes: a second time of the resource set corresponding to the feedback information, where the second time is used to describe a time at which the terminal starts and/or ends measurement of the resource set corresponding to the feedback information, and the second time includes at least one of a slot index, a combination of a frame index and a slot index, and a quantity of slots or a quantity of frames between the time at which the feedback information is sent and the measurement start and/or end time.

With reference to the fourth aspect, in some implementations of the fourth aspect, the feedback information includes: a first identifier, where the first identifier indicates the resource set corresponding to the feedback information, and the first identifier includes at least one of a resource set identifier, a reporting identifier corresponding to the resource set, and a trigger state identifier corresponding to the resource set.

With reference to the fourth aspect, in some implementations of the fourth aspect, the transceiver module is further configured to receive second configuration information from the network device, where the second configuration information is used to configure that the terminal device reports measurement information of a reference signal before and/or after a beam failure.

With reference to the fourth aspect, in some implementations of the fourth aspect, the transceiver module is further configured to receive trigger information from the network device. The processing module is configured to obtain the measurement information of the reference signal before and/or after the beam failure. The transceiver module is further configured to report, to the network device, the measurement information of the reference signal before and/or after the beam failure.

With reference to the fourth aspect, in some implementations of the fourth aspect, the second configuration information further includes: at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device.

With reference to the fourth aspect, in some implementations of the fourth aspect, the trigger information further includes: at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device.

With reference to the fourth aspect, in some implementations of the fourth aspect, the measurement information of the reference signal before and/or after the beam failure includes: beam strength fluctuation information of a resource corresponding to the reference signal before and after the beam failure and/or deep fading frequency of the resource corresponding to the reference signal before and after the beam failure.

According to a fifth aspect, a communication apparatus is provided, including a processor, configured to execute a computer program stored in a memory, to enable the communication apparatus to perform the communication method according to the first aspect or the second aspect.

According to a sixth aspect, a chip is provided, including: a processor, configured to invoke a computer program from a memory and run the computer program, to enable a communication device on which the chip system is installed to perform the communication method according to the first aspect and/or the second aspect.

According to a seventh aspect, a computer program is provided. When the computer program is executed by a communication apparatus, the communication method according to the first aspect and/or the second aspect is implemented.

According to an eighth aspect, a computer-readable storage medium is provided. The computer-readable storage medium stores a computer program. When the computer program runs on a computer, the computer is enabled to perform the communication method according to the first aspect and/or the second aspect.

### BRIEF DESCRIPTION OF DRAWINGS

FIG. 1 is a diagram of an application scenario according to an embodiment of this application;
FIG. 2 is a schematic flowchart of a communication method 200 according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a schematic flowchart of a communication method 500 according to an embodiment of this application;
FIG. 6 is a diagram of a communication apparatus 10 according to an embodiment of this application; and
FIG. 7 is a diagram of a communication apparatus 20 according to an embodiment of this application.

### DESCRIPTION OF EMBODIMENTS

The following describes the technical solutions of this application with reference to the accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

A terminal device in embodiments of this application may be user equipment, an access terminal device, a subscriber unit, a subscriber station, a mobile station, a remote station, a remote terminal device, a mobile device, a user terminal device, a terminal device, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, personal digital processing (Personal Digital Assistant, PDA), a handheld device having a wireless communication function, a computing device, another processing device connected to a wireless modem, a vehicle-mounted device, a wearable device, a terminal device in a future 5G network, a terminal device in a future evolved public land mobile communication network (public land mobile network, PLMN), or the like. This is not limited in embodiments of this application.

A network device in embodiments of this application may be a device configured to communicate with the terminal device. The network device may be a base station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a future 5G network, a network device in a future evolved PLMN network, or the like. This is not limited in embodiments of this application.

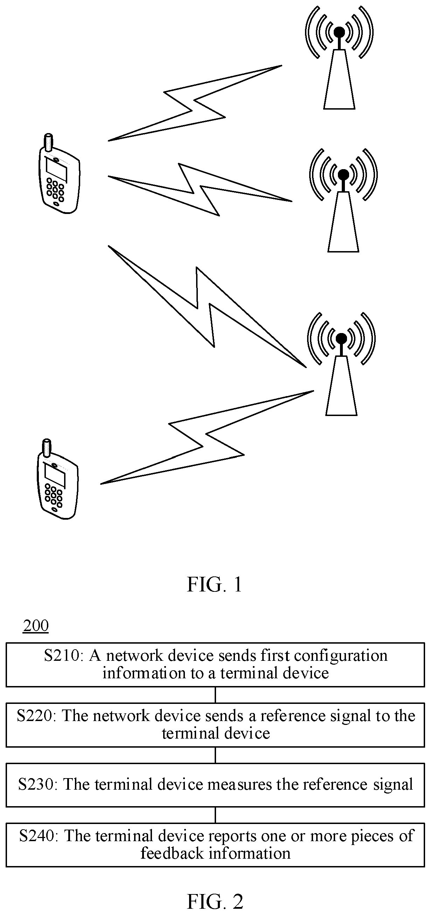

FIG. 1 is a diagram of an application scenario according to an embodiment of this application. As shown in FIG. 1, a communication system to which this embodiment of this application is applied includes one or more network devices and one or more terminal devices. A single network device may transmit data or control signaling to one or more terminal devices, or a plurality of network devices may simultaneously transmit data or control signaling to a single terminal device.

In this embodiment of this application, the network device and the terminal device transmit uplink and downlink data by using a specific beam. The network device and the terminal device determine, through a beam measurement process, a beam used for data transmission.

Specifically, the network device configures a plurality of beam measurement reference resources for the terminal device by using higher layer signaling, and each resource corresponds to one measurement signal. For each resource, the network device sends, by using one beam, a measurement signal corresponding to the resource. The terminal device measures a measurement signal sent by each beam, to determine quality of each beam (resource), for example, reference signal received power (reference signal received power, RSRP). By measuring RSRP of each beam, the terminal device selects one or more resources with maximum RSRP, and reports a resource index of the one or more resources and corresponding RSRP to the network device. The network device then selects one or more resources (beams) from the resources for data transmission.

It should be noted that in this embodiment of this application, the beam may be represented as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-co-location (quasi-co-location, QCL) information, a QCL assumption, a QCL indication, or the like. The beam may be indicated by using a transmission configuration indication state (TCI-state) parameter or a spatial relation (spatial relation) parameter. Therefore, in this application, the beam may be replaced with a spatial domain filter, a spatial filter, a spatial domain parameter, a spatial parameter, a spatial domain setting, a spatial setting, QCL information, a QCL assumption, a QCL indication, a TCI-state (a DL TCI-state or a UL TCI-state), a spatial relation, or the like. The foregoing terms are also equivalent to each other. Alternatively, the beam may be replaced with another term for representing the beam. This is not limited in this application.

A beam used to send a signal may be referred to as a transmit beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmit beam may be indicated by using a TCI-state.

A beam used to receive a signal may be referred to as a receive beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmit beam may be indicated by using a spatial relation spatial relation, an uplink TCI-state, or a sounding reference signal (sounding reference signal, SRS) resource (indicating a transmit beam using the SRS). Therefore, the uplink beam may alternatively be replaced with the SRS resource.

The transmit beam may be distribution of signal strength formed in different directions in space after a signal is transmitted via an antenna. The receive beam may be distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the network device measures different beams by using different resources, the terminal device feeds back measured resource quality, and the network device learns of quality of a corresponding beam. During data transmission, beam information is also indicated by using a resource corresponding to the beam information. For example, the network device indicates information about a physical downlink shared channel (physical downlink shared channel, PDSCH) beam of the terminal device by using a transmission configuration number (transmission configuration index, TCI) field in downlink control information (downlink control information, DCI).

Optionally, a plurality of beams having a same communication characteristic or similar communication characteristics are considered as one beam. One beam may include one or more antenna ports, configured to transmit a data channel, a control channel, a sounding signal, and the like. The one or more antenna ports forming the beam may also be considered as one antenna port set.

In embodiments of this application, unless otherwise specified, the beam is a transmit beam of the network device. During beam measurement, each beam of the network device corresponds to one resource. Therefore, an index of a resource may uniquely identify a beam corresponding to the resource.

FIG. 2 is a schematic flowchart of a communication method 200 according to an embodiment of this application. As shown in FIG. 2, the method 200 includes the following steps.

S210: A network device sends first configuration information to a terminal device, where the first configuration information is used to configure that the terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information includes N information groups, an n^{th} information group in the N information groups includes a measurement result of an n^{th} reference signal and/or an identifier of a resource corresponding to the n^{th} reference signal, the n^{th} information group corresponds to the n^{th} reference signal, N is an integer greater than or equal to 1, and n∈[1, N].

It should be understood that, in this embodiment of this application, each piece of feedback information corresponds to one resource set, resources corresponding to reference signals included in each piece of feedback information belong to a same resource set, a quantity of reference signals included in each piece of feedback information may be the same or may be different, and a specific value of N may be configured by the network device. A specific setting of N is not limited in this embodiment of this application.

For example, in this embodiment of this application, the resource set corresponding to the feedback information may be a CSI-SSB-ResourceSet or a CSI-RS-ResourceSet configured by the network device for the terminal device, and the resource corresponding to the reference signal may be an SSB resource or a CSI-RS resource configured by the network device for the terminal device. Specifically, the network device may configure one or more CSI-SSB-ResourceSets and CSI-RS-ResourceSets for the terminal device by using an information element CSI-ResourceConfig in RRC signaling, and each resource set includes one or more SSB resources or CSI-RS resources.

In this embodiment of this application, the network device may configure a reporting quantity for the terminal device. The reporting quantity is data that needs to be reported by the terminal device, that is, content included in the feedback information in this embodiment of this application. Each piece of feedback information may include a plurality of information groups, and each information group may include a measurement result of one reference signal.

Specifically, in this embodiment of this application, the measurement result in the information group may be RSRP. It should be understood that, because an L3 resource may be used as a reporting resource in this embodiment of this application, the RSRP may have higher precision than that in the conventional technology. For example, if an actual measurement result of the terminal device is 110.57 dB, and a measurement result reported based on an existing protocol is 110 dB, a measurement result that may be reported in this embodiment of this application is 100.57 dB.

It should be noted that quantization precision of the measurement result may be specified in the protocol, or a plurality of types of quantization precision may be specified in the protocol, and the network device configures one for the terminal. A reported RSRP range may also be specified in the protocol, or a plurality of ranges may be specified in the protocol, and the network device configures one for the terminal device. The terminal device may not report a measurement result that exceeds the RSRP range, or may report the measurement result based on a minimum value or a maximum value of the RSRP range.

In a possible implementation, the measurement result may further include a signal to interference plus noise ratio of the reference signal.

In a possible implementation, the information group further includes an identifier of a resource corresponding to the reference signal, and the identifier of the resource corresponding to the reference signal may directly indicate the resource carrying the reference signal.

For example, the identifier of the resource corresponding to the reference signal may include a CSI-RS-Resource ID or a CSI-SSB-Resource ID.

In a possible implementation, the information group further includes a first measurement parameter. The first measurement parameter is used to describe a state of the terminal device during measurement of the reference signal, and the first measurement parameter may include at least one of receive beam information of the terminal device, receive panel information of the terminal device, and a scenario identifier corresponding to the measurement result.

The receive beam information of the terminal device may be a receive beam direction/index of the terminal device that is used for measuring the reference signal. For example, the receive beam direction of the terminal device may be a receive beam direction of the terminal device in a predefined global coordinate system (global coordinate system, GCS). The information may further include a width of a receive beam of the terminal device. If a same receive beam of the terminal device is used for all reference signals in a resource set, only one piece of receive beam information of the terminal device needs to be reported in one resource set. If different receive beams of the terminal device are used for measuring the reference signal in the resource set, each reference signal resource corresponds to one piece of receive beam information of the terminal device.

The receive panel information of the terminal device may be a panel index of the terminal device that is used for measuring the reference signal, or may be a maximum quantity of SRS ports corresponding to a used panel of the terminal device. If a same panel of the terminal device is used for all the reference signals in the resource set, only one piece of panel information of the terminal device needs to be reported in one resource set. If different panels of the terminal device are used for measuring the reference signal in the resource set, each reference signal resource corresponds to one piece of panel information of the terminal device.

The scenario identifier corresponding to the measurement result may include one or more scenario identifiers, and different scenario identifiers indicate different scenarios in which the terminal device performs measurement. For example, when the terminal device measures the reference signal of the resource set, whether the terminal device sends rotation or whether a rotation angle is greater than a threshold A may be indicated by using the scenario identifier, where the identifier may be 0 bits or 1 bit. For another example, when the terminal device measures the reference signal of the resource set, whether the terminal device sends a displacement or whether the displacement is greater than a threshold B may also be indicated by using the scenario identifier. The threshold A and the threshold B may be configured by the network device.

In a possible implementation, the information group may further include a first time, and the first time is used to describe a time at which the terminal device measures the reference signal.

Specifically, the first time may be an absolute time. For example, the first time may be a slot index of a current frame, a combination of a frame index and a slot index, or the like. Alternatively, the first time may be a relative time. For example, the first time may be a quantity of slots between a reporting time and the measurement time.

In a possible implementation, the foregoing information groups may be sorted in a default order. For example, the information groups are sorted in ascending order based on identifiers of resources corresponding to reference signals corresponding to the information groups.

In a possible implementation, the feedback information further includes a second time of the resource set corresponding to the feedback information, where the second time is used to describe a time at which the terminal device starts and/or ends measurement of the resource set corresponding to the feedback information, and the second time includes at least one of a slot index, a combination of a frame index and a slot index, and a quantity of slots or a quantity of frames between the time at which the feedback information is sent and the measurement start and/or end time.

In a possible implementation, the feedback information further includes a first identifier, and the first identifier indicates the resource set corresponding to the feedback information.

The first identifier may indirectly indicate the resource corresponding to the reference signal, and the first identifier indicates the resource set corresponding to the feedback information. For example, the first identifier may be a CSI-ReportConfig ID, a CSI-RS-ResourceSet ID or a CSI-SSB-ResourceSet ID, a trigger state ID, a CSI-ResourceConfig ID, or an index k of a k^{th}-to-last measurement result. There is a correspondence between the first identifier and the resource corresponding to the reference signal.

Optionally, in S211, the network device sends second configuration information to the terminal device, where the second configuration information is used to configure that the terminal device reports measurement information of a reference signal before and/or after a beam failure. In a beam recovery process, the network device sends trigger information to the terminal device, where the trigger information is used to trigger the terminal device to report the measurement information of the reference signal before and after the beam failure.

Specifically, the trigger information may be beam recovery response information sent by the network device to the terminal. The beam recovery response information includes a field. The field indicates the terminal device whether to report the measurement information of the reference signal before and/or after the beam failure. The beam recovery response may be a PDCCH (on a new downlink beam) scrambled by using a C-RNTI delivered in beam failure recovery dedicated search space. The trigger information may alternatively be signaling separately sent by the network device.

In this embodiment of this application, the configuration information includes indication information, and the indication information indicates that the terminal device needs to report the measurement information of the reference signal before and/or after the beam failure. It should be noted that the indication information may alternatively indicate that the terminal device does not need to report the measurement information of the reference signal before and/or after the beam failure, and the terminal device does not perform a subsequent action. This has no effect on a problem to be resolved in this application. Details are not described in this application.

For example, the indication information may be a bit in the configuration information. If the bit is 1, the bit indicates that the terminal device is indicated to report the measurement information of the reference signal before and/or after the beam failure. If the bit is 0, the bit indicates that the terminal device is indicated not to report the measurement information of the reference signal before and/or after the beam failure.

In this embodiment of this application, the measurement information of the reference signal before and/or after the beam failure may include at least one of feedback information corresponding to a resource set corresponding to the reference signal before and/or after the beam failure, beam strength fluctuation information of a resource corresponding to the reference signal before and/or after the beam failure, and deep fading frequency of the resource corresponding to the reference signal before and/or after the beam failure.

In a possible implementation, the second configuration information is used to configure at least one of the following: whether the terminal device needs to report the measurement information before and/or after the beam failure, a quantity M of times of measurement information for latest M times before and/or after the beam failure that needs to be reported by the terminal device, a time window length of measurement information that is within a period of time before and/or after the beam failure and that needs to be reported by the terminal device, and a reference signal resource set identifier and/or a reference signal resource identifier before and/or after the beam failure that need/needs to be reported by the terminal device. After the terminal device determines the beam failure, and the second configuration information is used to configure that the terminal device needs to report the measurement information before and/or after the beam failure, a MAC layer of the terminal device triggers reporting of the measurement information of the reference signal before and/or after the beam failure.

In a possible implementation, the second configuration information is used to configure at least one of the following: whether the terminal device needs to report the measurement information before and/or after the beam failure, a quantity M of times of measurement information for latest M times before and/or after the beam failure that is reported by the terminal device, a time window length of measurement information that is within a period of time before and/or after the beam failure and that is reported by the terminal device, and a reference signal resource set identifier and/or a reference signal resource identifier before and/or after the beam failure that are/is reported by the terminal device. The trigger information sent by the network device only indicates the terminal to report the measurement information of the reference signal before and/or after the beam failure, but is not used to configure specific content of the reporting information for the terminal device.

In a possible implementation, the trigger information sent by the network device indicates the reporting quantity for the terminal device, and indicates the terminal to report the measurement information of the reference signal before and/or after the beam failure. The reporting quantity includes at least one of a quantity M of times of measurement information for latest M times before and/or after the beam failure that needs to be reported by the terminal device, a time window length of measurement information that is within a period of time before and/or after the beam failure and that needs to be reported by the terminal device, and a reference signal resource set identifier and/or a reference signal resource identifier before and/or after the beam failure that need/needs to be reported by the terminal device.

In a possible implementation, the second configuration information includes at least one of the following: whether the terminal device needs to report the measurement information before and/or after the beam failure; a list of quantities of times of measurement information before and/or after the beam failure that needs to be reported by the terminal device, where the list of quantities of times includes a quantity M of times of measurement information for latest M times before and/or after the beam failure that needs to be reported by one or more different terminal devices; a list of time window lengths of measurement information before and/or after the beam failure that needs to be reported by the terminal device, where the list of time window lengths includes a time window length of measurement information that is within a period of time before and/or after the beam failure and that needs to be reported by one or more different terminal devices; and a reference signal resource set list before and/or after the beam failure that needs to be reported by the terminal device, where the reference signal resource set list includes one or more reference signal resource sets, and the reference signal resource set includes one or more reference signal resources. The trigger information sent by the network device indicates the reporting quantity for the terminal device, and triggers the terminal to report the measurement information of the reference signal before and/or after the beam failure. The trigger information includes at least one of the following: information indicating the terminal to report the measurement information of the reference signal before and/or after the beam failure; an index of a quantity of times, indicating a value of a quantity of times in the list of quantities of times of measurement information before and/or after the beam failure that needs to be reported by the terminal device; an index of a time window, indicating a value of a time window length in the list of time window lengths of measurement information before and/or after the beam failure that needs to be reported by the terminal device; and a reference signal resource set identifier, indicating a reference signal resource set in the reference signal resource set list before and/or after the beam failure that needs to be reported by the terminal device.

Further, when the list of quantities of times of measurement information before and/or after the beam failure that needs to be reported by the terminal device includes only one value of a quantity of times, the trigger information does not need to separately indicate the list of quantities of times. Based on a same manner, when only one value is configured in the list of time window lengths of measurement information before and/or after the beam failure that needs to be reported by the terminal device and the reference signal resource set list before and/or after the beam failure that needs to be reported by the terminal device, the trigger information does not need to separately indicate the list of quantities of times either.

Specifically, in this embodiment of this application, the quantity M of times of measurement information for the latest M times before and/or after the beam failure that needs to be reported by the terminal device may be a reference signal resource set of the latest M times of measurement, or may be a reference signal resource of the latest M times of measurement. The time window length of measurement information before and/or after the beam failure that needs to be reported by the terminal device may be represented by at least one of a quantity of slots, a quantity of subframes, and a quantity of frames.

Optionally, in S212, the network device generates third configuration information, where the third configuration information indicates a first resource, and the first resource is used by the terminal device to report the one or more pieces of feedback information.

For example, the network device configures a reporting time-frequency resource for the terminal device by using CSI-ReportConfig. Each piece of CSI-ReportConfig may be associated with CSI-ResourceConfig, to obtain a resource set in which a reporting CSI-RS/SSB resource is located.

It should be understood that in this embodiment of this application, the L3 resource may be used as the reporting resource. Compared with a conventional L1 resource, reporting resources used in this embodiment of this application are more abundant, and reported data is more comprehensive and accurate.

Further, the third configuration information may be further used to configure a reporting manner for the terminal device.

Specifically, the reporting manner configured by the network device for the terminal device may be periodic reporting. The network device configures a reporting periodicity for the terminal device, and the terminal device periodically reports the one or more pieces of feedback information.

Alternatively, the reporting manner configured by the network device for the terminal device may be triggered reporting.

In a possible implementation, the network device sends a command to the terminal device, where the command indicates that the terminal device needs to report a measurement result, and the signaling may be DCI, a MAC CE, or RRC signaling. Further, the network device may configure a time offset value for the terminal device. After receiving the signaling, the terminal reports the one or more pieces of feedback information after the time offset value expires.

In a possible implementation, the terminal device applies to the network device for uplink sending, the network device feeds back an ACK after receiving signaling, and the terminal device reports the one or more pieces of feedback information after receiving the ACK.

It should be noted that the first configuration information, the second configuration information, and the third configuration information may be separately sent, or the first configuration information may include the second configuration information and/or the third configuration information. For example, the first configuration information includes the second configuration information, or the first configuration information includes the third configuration information, or the first configuration information includes the second configuration information and the third configuration information.

S220: The network device sends the reference signal to the terminal device, where each reference signal is carried on a corresponding resource, and each bearer resource corresponds to one resource set.

Specifically, the network device configures one or more CSI-SSB-ResourceSets and CSI-RS-ResourceSets for the terminal device by using the information element CSI-ResourceConfig in the resource control (radio resource control, RRC) signaling. Each resource set includes one or more channel state information-reference signal (channel state information-reference signal, CSI-RS) resources or channel state information-synchronization signal and broadcast channel measurement resource block (channel state information-synchronization signal and PBCH block, CSI-SSB) resources.

S230: The terminal device measures the reference signal.

S240: The terminal device reports the feedback information based on the first configuration information.

In a possible implementation, the terminal device further reports the feedback information based on the second configuration information and/or the third configuration information.

In a scenario of a plurality of resource sets, a plurality of pieces of feedback information may be separately reported to the network device, or may be reported by using one or more pieces of first information. The first information includes the plurality of pieces of feedback information. Specific reported content may be preset by the terminal device and the network device, or may be configured by the network device for the terminal device. This is not limited in this application.

In a scenario of a plurality of resource sets, if the terminal device reports the measurement information by using the first information, the network device configures, for the terminal device, a resource for reporting the first information. For example, the network device configures, for the terminal device by using CSI-ReportConfig, a reporting time-frequency resource. Each piece of CSI-ReportConfig is associated with CSI-ResourceConfig.

In this embodiment of this application, the terminal device may report more comprehensive and reliable measurement data and related information to the network device, for example, a measurement time, to assist the network device in collecting more AI model training data and optimizing an AI model.

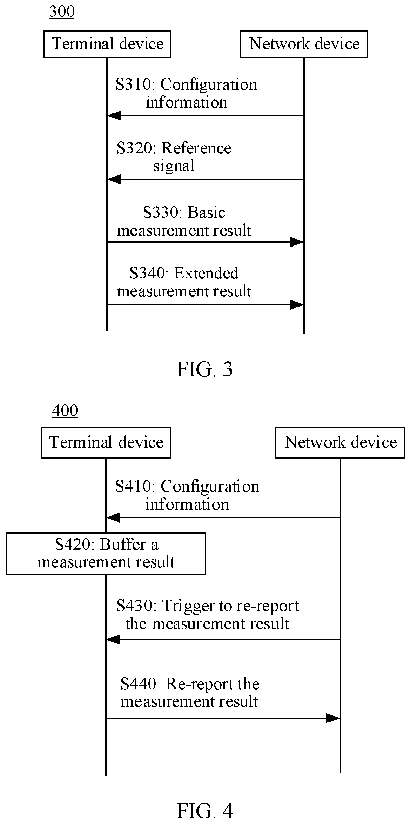

FIG. 3 is a schematic flowchart of a communication method 300 according to an embodiment of this application. It should be noted that in the method 300, a terminal device reports a measurement result based on an existing protocol, and reports the measurement result and related information according to the method in this embodiment of this application. In this embodiment of this application, a basic measurement result is a measurement result reported based on the existing protocol, and an extended measurement result is a measurement result and related information that are reported according to the method in this application. It should be understood that the method in this application and a reporting method in the existing protocol may be independent of each other. In other words, implementation of the method in this application does not depend on the reporting method in the existing protocol.

It should be understood that, in this embodiment of this application, a reference signal resource is a resource corresponding to the foregoing reference signal. In this embodiment of this application, descriptions in which a network device configures the terminal device, so that the terminal device can perform an action corresponding to the method in this application are mainly provided.

As shown in FIG. 3, main steps of the method 300 are as follows.

S310: The network device sends configuration information to the terminal device, where the configuration information includes information about a reference signal resource configured by the network device for the terminal device and reporting information configured by the network device for the terminal device.

The configuration information includes the information about the reference signal resource configured by the network device for the terminal device. Specifically, the network device configures one or more CSI-SSB-ResourceSets and CSI-RS-ResourceSets for the terminal device by using an information element CSI-ResourceConfig in resource control (radio resource control, RRC) signaling. Each resource set includes one or more channel state information-reference signal (channel state information-reference signal, CSI-RS) resources or channel state information-synchronization signal and broadcast channel measurement resource block (channel state information-synchronization signal and PBCH block, CSI-SSB) resources.

The configuration information further includes the reporting information configured by the network device for the terminal device. Specifically, the reporting information includes information for reporting the basic measurement result and information for reporting the extended measurement result.

In this embodiment of this application, the basic measurement result is RSRP in the existing protocol, and the extended measurement result is another measurement result that facilitates beam prediction.

In a possible implementation, the network device configures, for the terminal device by using same configuration information, the information for reporting the basic measurement result and the information for reporting the extended measurement result.

For example, the network device configures, for the terminal device by using CSI-ReportConfig, both information such as a time-frequency resource, a reporting quantity, and a quantity of reporting resources (beams) for reporting the basic measurement result, and a time-frequency resource, a reporting quantity, and a reporting manner for reporting the extended measurement result. There is a correspondence between each piece of CSI-ReportConfig and CSI-ResourceConfig, that is, a reported measurement result is in one-to-one correspondence with a reference signal resource set.

In a possible implementation, the network device separately configures, for the terminal device by using different configuration information, the information for reporting the basic measurement result and the information for reporting the extended measurement result.

For example, the network device configures, for the terminal device by using CSI-ReportConfig, information such as a time-frequency resource, a reporting quantity, and a quantity of reporting resources (beams) for reporting the basic measurement result, and the network device configures, for the terminal device by using other RRC signaling, a time-frequency resource, a reporting quantity, and a reporting manner for reporting the extended measurement result. Specific RRC signaling is not limited in this embodiment of this application.

In this embodiment of this application, the information for reporting the extended measurement result that is configured by the network device for the terminal device may include a time-frequency resource, a reporting quantity, and a reporting manner for reporting an extended beam measurement result.

Specifically, the information for reporting the extended measurement result by the terminal device may include a resource for reporting the extended beam measurement result. The resource for reporting the extended beam measurement result may be the same as or different from a resource for reporting a basic beam measurement result.

In a possible implementation, a same time-frequency resource is used to report the extended measurement result and the basic measurement result. Based on the existing protocol, the basic measurement result can be transmitted only by using L1. Therefore, in this case, the extended measurement result can also be transmitted only by using L1.

In a possible implementation, different time-frequency resources are used to report the extended measurement result and the basic measurement result. The basic measurement result is transmitted by using L1, and the extended measurement result may be transmitted by using another resource. For example, the extended measurement result may be transmitted by using L3.

It should be understood that, because there are a small quantity of transmission resources at L1, it is generally preferentially considered that different time-frequency resources are used to report the extended measurement result and the basic measurement result.

The information for reporting the extended measurement result by the terminal device may include the manner for reporting the extended beam measurement result, and the reporting manner may include periodic reporting and aperiodic reporting.

In a possible implementation, the configuration information is used to configure information about periodically reporting, by the terminal device, the extended beam measurement result, and the terminal device periodically reports the extended beam measurement result to the network device based on a configured periodicity. The reporting periodicity may be set based on a requirement. This is not limited in this application.

In a possible implementation, the network device sends indication information to the terminal device, where the indication information indicates the terminal device to report the extended measurement result, and the indication information may be DCI, a MAC layer control element (MAC CE), or RRC signaling. Further, the network device may configure a time offset value for the terminal device. After receiving the indication information, the terminal device reports the extended measurement result after the time offset value expires.

In a possible implementation, the terminal device sends request information to the network device, the network device feeds back a positive acknowledgment ACK after receiving the request information, and the terminal device reports the extended measurement result after receiving the ACK.

The information for reporting the extended measurement result by the terminal device may include the reporting quantity of the extended measurement result. Specifically, the reporting quantity may include one or more of the following information: measurement time information, measurement target information, measurement result information, and state information of the terminal device.

Specifically, the measurement time information indicates a measurement time corresponding to the reported extended measurement result. The measurement time may be a start time or an end time of measurement of a resource set, or may be a measurement time of each reference signal in the resource set. The measurement time may be an absolute time. For example, the measurement time may be a slot index of a current frame, or may be a combination of a frame index and a slot index. The measurement time may alternatively be a relative time. For example, the measurement time is a quantity of slots between a reporting time and a measurement time.

The measurement target information is information about a reference resource set corresponding to the reported extended measurement result. The measurement target information may directly indicate the reference resource set corresponding to the extended measurement result. For example, the measurement target information may be a reference resource set index, including a CSI-RS-ResourceSet ID or a CSI-SSB-ResourceSet ID. The reference resource set corresponding to the extended measurement result is determined based on index information. The measurement target information may alternatively indirectly indicate the reference resource set. For example, the measurement target information may be a CSI-ReportConfig ID or a CSI-ResourceConfig ID. The reference resource set corresponding to the extended measurement result may be determined based on the information. The measurement target information may alternatively be a trigger state ID, and a CSI-ReportConfig ID and a CSI-ResourceSet ID may be determined based on the information, to determine the reference resource set corresponding to the extended measurement result. The measurement target information may alternatively be an index k of a k^{th}-to-last basic measurement result, and an association relationship with basic measurement may be determined, to determine the reference resource set corresponding to the extended measurement result.

The measurement result information includes a reference signal resource index and RSRP. For example, the measurement result information may include RSRP of all reference signals in a resource set corresponding to the basic measurement result, or may include RSRP of a reference signal that is not included in the basic measurement result, or may include RSRP of all reference signals in a resource set corresponding to the extended measurement result.

It should be noted that, in this embodiment of this application, quantization precision of RSRP in extended measurement result information is higher than that of RSRP in basic measurement result information. For example, an actual measurement result of the terminal device is 110.57 dB, a reported basic measurement result is 110 dB, and a reported extended measurement result is 100.57 dB. The quantization precision may be preset, or a plurality of types of quantization precision may be preset, and the network device configures one for the terminal device. A reported RSRP range may also be preset, or a plurality of ranges may be preset, and the network device configures one for the terminal device. The terminal device may not report a measurement result that exceeds the RSRP range, or may report the measurement result based on a minimum value or a maximum value of the RSRP range.

In a possible implementation, the measurement result information may further include a signal to interference plus noise ratio of the reference signal.

It should be understood that, based on the existing protocol, the basic measurement result can be transmitted only by using L1, and limited by a quantity of resources at L1, precision of the basic measurement result is low. However, the extended measurement result may be transmitted by using another layer, and there are more abundant resources, so that the extended measurement result can have higher precision.

The state information of the terminal device may include at least one of receive beam information of the terminal device, receive panel information of the terminal device, and a scenario identifier corresponding to the measurement result.

The receive beam information of the terminal device may be a receive beam direction/index of the terminal device that is used for measuring the reference signal. For example, the receive beam direction of the terminal device may be a receive beam direction of the terminal device in a predefined global coordinate system (global coordinate system, GCS). The information may further include a width of a receive beam of the terminal device. If a same receive beam of the terminal device is used for measuring all reference signals in a resource set, only one piece of receive beam information of the terminal device needs to be reported in one resource set. If different receive beams of the terminal device are used for measuring the reference signal in the resource set, each reference signal resource corresponds to one piece of receive beam information of the terminal device.

The receive panel information of the terminal device may be a panel index of the terminal device that is used for measuring the reference signal, or may be a maximum quantity of SRS ports corresponding to a used panel of the terminal device. If a same panel of the terminal device is used for measuring all the reference signals in the resource set, only one piece of panel information of the terminal device needs to be reported in one resource set. If different panels of the terminal device are used for measuring the reference signal in the resource set, each reference signal resource corresponds to one piece of panel information of the terminal device.

The scenario identifier corresponding to the measurement result may include one or more scenario identifiers, and different scenario identifiers indicate different scenarios in which the terminal device performs measurement. For example, when the terminal device measures the reference signal of the resource set, whether the terminal device sends rotation or whether a rotation angle is greater than a threshold A may be indicated by using the scenario identifier, where the identifier may be 0 bits or 1 bit. For another example, when the terminal device measures the reference signal of the resource set, whether the terminal device sends a displacement or whether the displacement is greater than a threshold B may also be indicated by using the scenario identifier. The threshold A and the threshold B may be configured by the network device.

Optionally, the information for reporting the extended measurement result by the terminal device may further include an association relationship between the extended measurement result and the basic measurement result.

Specifically, the network device configures, for the terminal device, a maximum quantity of extended measurement results reported at a time, and each extended measurement result corresponds to at least one basic measurement result. To be specific, an extended measurement result reported by the terminal device each time may be one or more extensions of a network device measurement result, but a maximum quantity of extended measurement results is determined based on the maximum quantity of extended measurement results that is configured by the network device.

The network device configures the association relationship between the extended measurement result and the basic measurement result for the terminal device. One is an explicit manner. The extended measurement result may include one or more of the following information: a CSI-ReportConfig ID, a CSI-RS-ResourceSet ID or a CSI-SSB-ResourceSet ID, a trigger state ID, a CSI-ResourceConfig ID, and an index k of a k^{th}-to-last basic measurement result. The network device determines, based on the indexes, a basic measurement result corresponding to the extended measurement result. Another manner is an implicit manner. The terminal device reports extended measurement results sorted in a default sequence, and each extended measurement result corresponds to one basic measurement result. For example, an extended measurement result of a latest basic measurement result is ranked first, and an extended measurement result of an earliest basic measurement result is ranked last.

S320: The network device sends the reference signal, and the terminal device performs measurement. The terminal device measures the reference signal on a corresponding time-frequency resource based on a resource configuration of the network device.

S330: The terminal device reports a beam basic measurement result. The terminal device reports the resource index and the corresponding RSRP based on a basic measurement result reporting configuration of the network device.

S340: The terminal device reports a beam extended measurement result. The terminal device reports the extended measurement result based on an extended measurement result reporting configuration of the network device.

In this embodiment of this application, the network device may configure the terminal device to further report more reliable beam measurement result related information more, to assist the network device in collecting more AI model training data, improving efficiency and reliability of AI model training.

FIG. 4 is a schematic flowchart of a communication method 400 according to an embodiment of this application. It should be noted that the method 400 is a method used when a beam failure occurs. As shown in FIG. 4, main steps of the method 400 are as follows.

S410: A network device sends configuration information, where the configuration information is used to configure that a terminal device reports measurement information of a reference signal before and/or after the beam failure.

In this embodiment of this application, the configuration information includes indication information, and the indication information indicates the terminal device to report the measurement information of the reference signal before and/or after the beam failure. It should be noted that the indication information may alternatively indicate the terminal device not to report the measurement information of the reference signal before and/or after the beam failure, and the terminal device does not perform a subsequent action. This has no effect on a problem to be resolved in this application. Details are not described in this application.

For example, the indication information may be a bit in the configuration information. If the bit is 1, the bit indicates that the terminal device is indicated to report the measurement information of the reference signal before and/or after the beam failure. If the bit is 0, the bit indicates that the terminal device is indicated not to report the measurement information of the reference signal before and/or after the beam failure.

In this embodiment of this application, the measurement information of the reference signal before and/or after the beam failure may include at least one of feedback information corresponding to a resource set corresponding to the reference signal before and/or after the beam failure, beam strength fluctuation information of a resource corresponding to the reference signal before and/or after the beam failure, and deep fading frequency of the resource corresponding to the reference signal before and/or after the beam failure.

In a possible implementation, the configuration information is used to configure at least one of the following: whether the terminal device needs to report the measurement information before and/or after the beam failure, a quantity M of times of measurement information for latest M times before and/or after the beam failure that is reported by the terminal device, a time window length of measurement information that is within a period of time before and/or after the beam failure and that is reported by the terminal device, and a reference signal resource set identifier and/or a reference signal resource identifier before and/or after the beam failure that are/is reported by the terminal device. Trigger information sent by the network device only indicates the terminal to report the measurement information of the reference signal before and/or after the beam failure, but is not used to configure specific content of the reporting information for the terminal device.

In a possible implementation, the configuration information includes at least one of the following: whether the terminal device needs to report the measurement information before and/or after the beam failure; a list of quantities of times of measurement information before and/or after the beam failure that needs to be reported by the terminal device, where the list of quantities of times includes a quantity M of times of measurement information for latest M times before and/or after the beam failure that needs to be reported by one or more different terminal devices; a list of time window lengths of measurement information before and/or after the beam failure that needs to be reported by the terminal device, where the list of time window lengths includes a time window length of measurement information that is within a period of time before and/or after the beam failure and that needs to be reported by one or more different terminal devices; and a reference signal resource set list before and/or after the beam failure that needs to be reported by the terminal device, where the reference signal resource set list includes one or more reference signal resource sets, and the reference signal resource set includes one or more reference signal resources. The trigger information sent by the network device indicates the reporting quantity for the terminal device, and triggers the terminal to report the measurement information of the reference signal before and/or after the beam failure. The trigger information includes at least one of the following: information indicating the terminal to report the measurement information of the reference signal before and/or after the beam failure; an index of a quantity of times, indicating a value of a quantity of times in the list of quantities of times of measurement information before and/or after the beam failure that needs to be reported by the terminal device; an index of a time window, indicating a value of a time window length in the list of time window lengths of measurement information before and/or after the beam failure that needs to be reported by the terminal device; and a reference signal resource set identifier, indicating a reference signal resource set in the reference signal resource set list before and/or after the beam failure that needs to be reported by the terminal device.

Further, when the list of quantities of times of measurement information before and/or after the beam failure that needs to be reported by the terminal device includes only one value of a quantity of times, the trigger information does not need to separately indicate the list of quantities of times. Based on a same manner, when only one value is configured in the list of time window lengths of measurement information before and/or after the beam failure that needs to be reported by the terminal device and the reference signal resource set list before and/or after the beam failure that needs to be reported by the terminal device, the trigger information does not need to separately indicate the list of quantities of times either.

Specifically, in this embodiment of this application, the quantity M of times of measurement information for the latest M times before and/or after the beam failure that needs to be reported by the terminal device may be a reference signal resource set of the latest M times of measurement, or may be a reference signal resource of the latest M times of measurement. The time window length of measurement information before and/or after the beam failure that needs to be reported by the terminal device may be represented by at least one of a quantity of slots, a quantity of subframes, and a quantity of frames.

S420: The terminal device buffers a measurement result.

The terminal device buffers the corresponding measurement result based on the configuration information of the network device.

S430: The network device sends trigger information to the terminal device, where the trigger information is used to trigger the terminal device to re-report the measurement result before and/or after the beam failure.

When the beam failure occurs on the terminal device, the network device may send the trigger information in a beam failure recovery process, to trigger the terminal device to re-report the measurement result before and/or after the beam failure.

In a beam recovery process, the network device sends trigger information to the terminal device, where the trigger information is used to trigger the terminal device to report the measurement information of the reference signal before and after the beam failure.

Specifically, the trigger information may be beam recovery response information sent by the network device to the terminal. The beam recovery response information includes a field. The field indicates the terminal device whether to report the measurement information of the reference signal before and/or after the beam failure. The beam recovery response may be a PDCCH (on a new downlink beam) scrambled by using a C-RNTI delivered in beam failure recovery dedicated search space. The trigger information may alternatively be signaling separately sent by the network device.

For example, the terminal device sends a preamble on a beam recovery dedicated random access channel (random access channel, RACH) resource. The PRACH resource is associated with a CSI-RS resource and/or a synchronization signal and broadcast channel measurement resource block (synchronization signal and PBCH block, SSB) that are/is used for a new beam identifier. Alternatively, the terminal device initiates contention-based random access. The network device delivers, in the beam failure recovery dedicated search space, a physical downlink control channel (physical downlink control channel, PDCCH) scrambled by using a cell-radio network temporary identifier (cell-radio network temporary identifier, C-RNTI). The terminal device starts to monitor a beam failure recovery response of a gNB on the PDCCH in four slots after sending a PRACH. A size of a monitoring window is configured by a higher layer. If the PDCCH of the gNB is received in the monitoring window, it indicates that beam failure recovery succeeds. The network device may include the trigger information in the PDCCH, to trigger the terminal device to re-report the measurement result before and/or after the beam failure.

In a possible implementation, the trigger information sent by the network device indicates the reporting quantity for the terminal device, and indicates the terminal to report the measurement information of the reference signal before and/or after the beam failure. The reporting quantity includes at least one of a quantity M of times of measurement information for latest M times before and/or after the beam failure that needs to be reported by the terminal device, a time window length of measurement information that is within a period of time before and/or after the beam failure and that needs to be reported by the terminal device, and a reference signal resource set identifier and/or a reference signal resource identifier before and/or after the beam failure that need/needs to be reported by the terminal device.

S440: Re-report the measurement result.

The terminal device re-reports the measurement result of a network configuration or indication, including one or more of the following: a reference signal resource set index, a reference signal resource index and RSRP, an extended measurement result (for specific content, refer to S210), beam strength fluctuation information (for example, a variance) corresponding to the reference signal resource, and deep fading frequency (for example, frequency at which RSRP is lower than a threshold) corresponding to the reference signal resource.

The network device triggers the terminal device to report beam measurement results before and after the beam failure and characteristics of the beam measurement results before and after the beam failure, and there are usually some rules in the measurement results before and after the beam failure. This can effectively assist the network device in performing model training, and improve efficiency and reliability of model training.

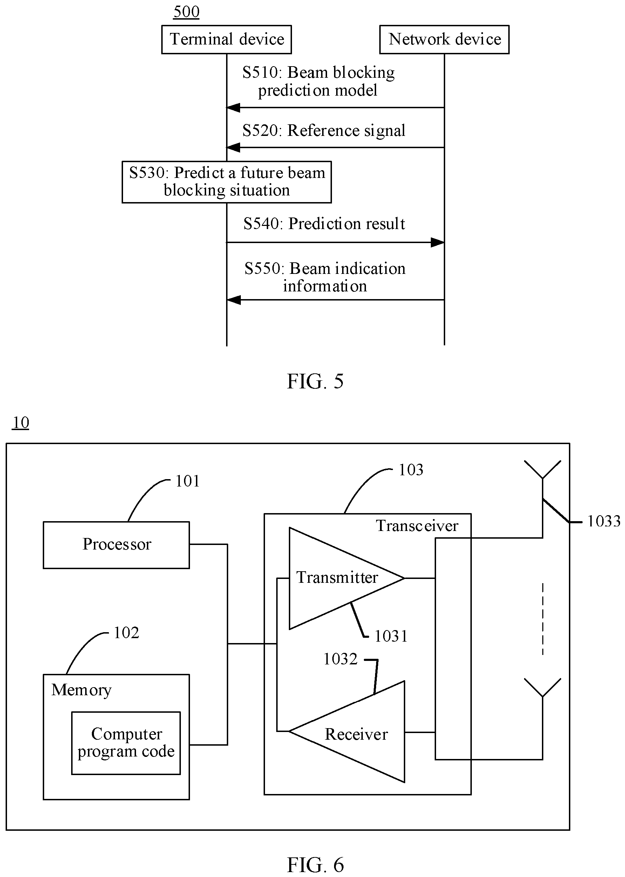

FIG. 5 is a schematic flowchart of a communication method 500 according to an embodiment of this application. As shown in FIG. 5, main steps of the method 500 are as follows.

Optionally, in S510, a network device sends a beam blocking prediction model to a terminal device.

In a possible implementation, the network device may send configuration information for model input and configuration information for model output to the terminal device.

The network device sends the configuration information for model input to the terminal device. Specifically, the configuration information for model input includes a monitoring time window length of a historical measurement result, and the model input is a measurement result within the monitoring time window length. For example, the monitoring time window length may be represented by a quantity x of slots, a quantity y of frames, or the like, and a measurement result input to the model is a measurement result of first x slots or first y frames. Alternatively, the monitoring time window length may be represented by a quantity n of times of beam measurement results, and a measurement result input to the model is a measurement result of first n times.

Further, in a possible implementation, the network device sends a measurement result sampling rate to the terminal device. Based on the measurement result sampling rate, the measurement result input to the model may be a part of measurement results within the monitoring time window length. For example, measurement results of some slots or some quantities of times are extracted at intervals as the model input. In this way, a measurement result within a longer monitoring time window length can be used, and complexity of the prediction model can be reduced.

The configuration information for model input further includes an input data type. The network device may configure input data of the model as measurement results of different reference signals. For example, the model input is RSRP of different SSBs or CSI-RSs.

The network device sends the configuration information for model output to the terminal device. Specifically, the configuration information for model output includes a time window length of prediction, and the model output is a beam blocking situation within the time window length of prediction. There are two manners in which the network device sends the configuration information for model output to the terminal device. One manner is to configure a minimum time window unit (granularity) of prediction and a minimum quantity of time windows of prediction. For example, if the minimum time window unit (granularity) of prediction is two slots, and the minimum quantity of time windows of prediction is 5, a beam blocking situation in a future 10 slots is predicted. The other manner is to directly configure a time window length.

The configuration information for model output further includes an output data type, and the output data type includes at least one of a current beam blocking probability, a blocking occurrence moment, a blocking residence time, and a candidate beam index.

In a possible implementation, the network device may send a beam blocking prediction manner to the terminal device. Specifically, the beam blocking prediction manner includes periodic prediction and triggered prediction. The periodic prediction means that the terminal device performs beam blocking prediction at intervals of a first time length. The first time length may be set based on an actual requirement, and this is not limited in this embodiment of this application. The triggered prediction means that the terminal device performs beam blocking prediction after receiving a trigger instruction of the network device.

In a possible implementation, the network device may further send, to the terminal device, configuration information for reporting a beam blocking prediction result.

The configuration information for reporting the beam blocking prediction result includes a time window length of beam blocking that needs to be reported. The configuration information for reporting the beam blocking prediction result has two forms. One is a minimum time window unit (granularity) S of prediction and a quantity W of time windows of prediction. The other manner is a time window length L of prediction.

The configuration information for reporting the beam blocking prediction result includes configuration information of a reporting resource and configuration information of a reporting manner.

In a possible implementation, the beam blocking prediction result may use a same reporting resource and reporting manner as beam measurement. For example, a field may be used to indicate whether blocking prediction information is included.

In a possible implementation, the reporting resource and the reporting manner may be separately configured for the beam blocking prediction result, and a reporting configuration may be measurement resource binding.

The reporting manner may include periodic reporting and aperiodic reporting.

In a possible implementation, the configuration information is used to configure that the terminal device periodically reports the beam blocking prediction result, and the terminal device periodically reports the beam blocking prediction result to the network device based on a configured periodicity. The reporting periodicity may be set based on a requirement. This is not limited in this application.

In a possible implementation, the network device sends indication information to the terminal device, where the indication information indicates the terminal device to report the beam blocking prediction result, and the indication information may be DCI, a MAC CE, or RRC signaling. Further, the network device may configure a time offset value for the terminal device. After receiving the indication information, the terminal device reports the beam blocking prediction result after the time offset value expires.

In a possible implementation, the terminal device sends request information to the network device, the network device feeds back an ACK after receiving the request information, and the terminal device reports the beam blocking prediction result after receiving the ACK.

S520: The terminal device receives the reference signal sent by the network device.

S530: The terminal device predicts a future beam blocking situation by using the beam blocking prediction model.

The terminal device calculates reference signal strength, and predicts, by using some or all signal measurement results in a historical monitoring time window, the future beam blocking station and a candidate beam.

It should be noted that the beam blocking prediction model may be a model sent by the network device to the terminal device, or may be a model trained by the terminal device.

S540: The terminal device reports a prediction result of the beam blocking prediction model, where the prediction result includes the future beam blocking situation and a candidate beam situation.

The terminal device reports the future beam blocking situation and the candidate beam situation. Reported content may include one or more of the following: a current beam blocking probability P; a result of determining whether there will be blocking, for example, 0 indicates that there will be no blocking, and 1 indicates that there will be blocking; a result of determining whether there is a need to switch to a new beam, for example, 0 indicates that there is no need to switch to the new beam, and 1 indicates that there is a need to switch to the new beam; average RSRP or an RSRP decrement of a current beam; a candidate beam index; predicted candidate beam RSRP or candidate beam RSRP measured last time; a predicted movement direction of an obstruction; a predicted average speed and acceleration of movement of the obstruction; a moment at which the beam is blocked; a beam blocking residence time; and a beam blocking time ratio, that is, a ratio of the beam blocking residence time to the minimum time window unit of prediction.

In the foregoing reported content, except the last item, other content may be reported in two manners. Manner 1: A corresponding prediction result is reported in each minimum time window unit of prediction, that is, prediction results of W minimum time window units of prediction need to be reported, and indexes of the minimum time windows of prediction may be further reported or sorted in sequence. Manner 2: Only one prediction result is reported within W minimum time window units of prediction or within a time window length L of prediction, and the prediction result is a prediction result for a time length W*S or a time length L. The last item in the foregoing reported content can be reported only in Manner 1.

It should be noted that the moment at which the beam is blocked may be an index of the minimum time window unit of prediction, or may be a specific absolute time (a slot number, a symbol index, or the like of a current frame), or may be a specific relative time (a sequence number of a slot or a symbol after a current moment). The beam blocking residence time may be a minimum quantity of time window units of prediction, or may be a specific time length. For example, the beam blocking residence time may be a quantity of slots, a quantity of symbols, or the like.

The terminal device needs to comply with the following rules when reporting the future beam blocking situation and the candidate beam situation.

Condition 1: The blocking probability is greater than a threshold A.

Condition 2: The RSRP when the current beam is blocked is less than a threshold, or the RSRP decrement when the current beam is blocked is greater than a threshold.

Condition 3: There is a need to switch to the new beam.

Condition 4: The current beam blocking residence time is greater than a threshold B.

Condition 5: The beam blocking time ratio is greater than a threshold C.

The threshold A, the threshold B, and the threshold C may be configured by the network device.

A protocol may specify one or more of the following reporting rules: reporting is performed only when at least one minimum time window unit of prediction, the time length L of prediction, or the W minimum time window units of prediction meet one or more of the foregoing conditions; and a corresponding beam blocking situation and a corresponding candidate beam situation are reported only when the minimum time window unit of prediction meets one or more of the foregoing conditions.

S550: The network device sends beam indication information.

The network device receives information reported by the terminal device, and determines whether to switch a beam. Specifically, if the predicted current beam blocking probability received by the network device is less than the threshold, the network device does not send a new beam indication; if the predicted RSRP when the current beam is blocked and that is received by the network device is greater than RSRP of another beam or a candidate beam, or the RSRP decrement is less than a value, the network device does not send the new beam indication; if a period from the current moment to a moment at which beam blocking occurs is earlier than a moment at which the beam indication takes effect, and a moment at which the beam blocking residence ends is earlier than the moment at which the beam indication takes effect, the network device does not send the new beam indication; and if the predicted current beam blocking probability received by the network device is greater than the threshold, the RSRP of the candidate beam is greater than RSRP of a current beam, and a beam blocking time is long, the network device may send the new beam indication.

According to the foregoing method, FIG. 6 is a diagram of a communication apparatus 10 according to an embodiment of this application. As shown in FIG. 6, the apparatus 10 may be a network device, or may be a chip or a circuit, for example, a chip or a circuit that may be disposed in the network device. The network device may correspond to the network device in the foregoing method.

The apparatus 10 may include a processor 101 (that is, an example of a processing module) and a memory 102. The memory 102 is configured to store instructions, and the processor 101 is configured to execute the instructions stored in the memory 102, so that the apparatus 10 implements the steps performed by the network device in the foregoing method 200 to the method 500.

Further, the apparatus 10 may further include a transceiver 103 (that is, an example of a transceiver module). Further, the processor 101, the memory 102, and the transceiver 103 may communicate with each other by using an internal connection path, to transfer a control signal and/or a data signal. The memory 102 is configured to store computer program code. The processor 101 may be configured to invoke a computing program from the memory 102 and run the computing program, to control the transceiver 103 to receive and send a signal, and complete the steps of the network device in the foregoing method 200 to the method 500. The memory 102 may be integrated into the processor 101, or may be disposed separately from the processor 101.

The transceiver 103 includes a transmitter 1031, a receiver 1032, and an antenna 1033. The receiver 1032 may be configured to receive transmission control information by using the antenna 1033, and the transmitter 1031 may be configured to send transmission feedback information to a terminal device 20 by using the antenna 1033.

Optionally, if the apparatus 10 is the chip or the circuit, the receiver 1032 is an input interface, and the transmitter 1031 is an output interface.

In an implementation, it may be considered that a function of the transceiver 103 is implemented by using a transceiver circuit or a dedicated transceiver chip. It may be considered that the processor 101 is implemented by using a dedicated processing chip, a processing circuit, a processor, or a general-purpose chip.

In another implementation, it may be considered that the network device provided in this embodiment of this application is implemented by using a general-purpose computer. To be specific, program code for implementing functions of the processor 101 and the transceiver 103 is stored in the memory 102. A general-purpose processor implements the functions of the processor 101 and the transceiver 103 by executing the code in the memory 102.

The foregoing listed functions and actions of the modules or units in the communication apparatus 10 are merely examples for description. The modules or units in the communication apparatus 10 may be configured to perform actions or processing processes performed by the network device in the foregoing method 200 to the method 500. To avoid repetition, detailed descriptions are omitted herein.

For concepts, explanations, detailed descriptions, and other steps of the apparatus 10 that are related to the technical solutions provided in embodiments of this application, refer to the descriptions of the content in the foregoing methods or other embodiments. Details are not described herein again.

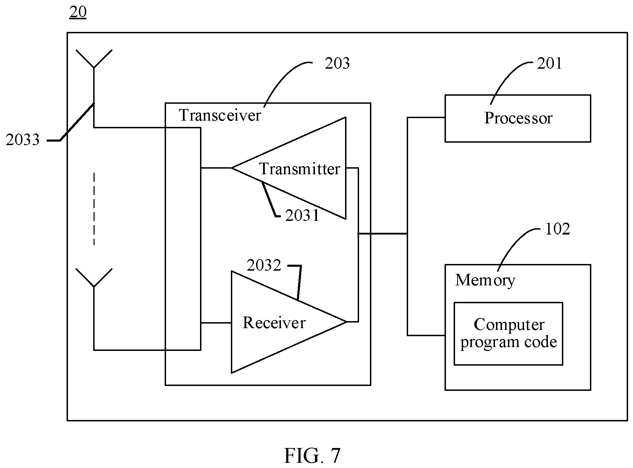

According to the foregoing method, FIG. 7 is a diagram of a communication apparatus 20 according to an embodiment of this application. As shown in FIG. 7, the apparatus 20 may be a terminal device, or may be a chip or a circuit, for example, a chip or a circuit that may be disposed in the terminal device. The terminal device corresponds to the terminal device in the foregoing method 200 to the method 500.

The apparatus 20 may include a processor 201 (that is, an example of a processing module) and a memory 202. The memory 202 is configured to store instructions, and the processor 201 is configured to execute the instructions stored in the memory 202, so that the apparatus 20 implements the steps performed by the terminal device in the foregoing method 200 to the method 500.

Further, the apparatus 20 may further include a transceiver 203 (that is, an example of a transceiver module). Still further, the processor 201, the memory 202, and the transceiver 203 may communicate with each other by using an internal connection path, to transfer a control signal and/or a data signal. The memory 202 is configured to store a computer program. The processor 201 may be configured to invoke the computing program from the memory 202 and run the computing program, to control the transceiver 203 to receive or send a signal, and complete the steps of the terminal device in the foregoing method 200 to the method 500. The memory 202 may be integrated into the processor 201, or may be disposed separately from the processor 201.

The transceiver 203 includes a transmitter 2031, a receiver 2032, and an antenna 2033. The receiver 2032 may be configured to receive transmission control information by using the antenna 2033, and the transmitter 2031 may be configured to send transmission feedback information to a network device 10 by using the antenna 2033.

Optionally, if the apparatus 20 is the chip or the circuit, the receiver 2032 is an input interface, and the transmitter 2031 is an output interface.

Optionally, if the apparatus 20 is the chip or the circuit, the apparatus 20 may alternatively not include the memory 202. The processor 201 may read instructions (programs or code) in a memory outside the chip, to implement a function of the terminal device in the foregoing method 200 to the method 500.

In an implementation, it may be considered that a function of the transceiver 203 is implemented by using a transceiver circuit or a dedicated transceiver chip. It may be considered that the processor 201 is implemented by using a dedicated processing chip, a processing circuit, a processor, or a general-purpose chip.

In another implementation, it may be considered that the terminal device provided in this embodiment of this application is implemented by using a general-purpose computer. To be specific, program code for implementing functions of the processor 201 and the transceiver 203 is stored in the memory. A general-purpose processor implements the functions of the processor 201 and the transceiver 203 by executing the code in the memory.

The modules or units in the communication apparatus 20 may be configured to perform actions or processing processes performed by the terminal device in the foregoing method 200 to the method 500. To avoid repetition, detailed descriptions are omitted herein.

For concepts, explanations, detailed descriptions, and other steps of the apparatus 20 that are related to the technical solutions provided in embodiments of this application, refer to the descriptions of the content in the foregoing methods or other embodiments. Details are not described herein again.

According to the method provided in embodiments of this application, an embodiment of this application further provides a communication system, including the foregoing network device and one or more terminal devices.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally represents an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located at one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a network device and comprising:
sending first configuration information to a terminal device, wherein the first configuration information is used to configure that the terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information comprises N information groups, an n^{th} information group in the N information groups comprises a measurement result of an n^{th} reference signal and/or an identifier of a resource corresponding to the n^{th} reference signal, N is an integer greater than or equal to 1, and n∈[1,N].

2. The method according to claim 1, wherein the n^{th} information group in the N information groups further comprises:
a first measurement parameter of the n^{th} reference signal, wherein the first measurement parameter is used to describe a terminal state of the terminal device during measurement of the n^{th} reference signal, the first measurement parameter comprises at least one of receive beam information for measuring the n^{th} reference signal by the terminal device, receive panel information for measuring the n^{th} reference signal by the terminal device, and a scenario identifier for measuring the n^{th} reference signal by the terminal device, and the scenario identifier is used to describe a rotation state and/or a displacement state of the terminal device during the measurement of the reference signal.

3. The method according to claim 1 or 2, wherein the n^{th} information group in the N information groups further comprises:
a first time of the n^{th} reference signal, wherein the first time is used to describe a time at which the terminal device measures the n^{th} reference signal, and the first time comprises at least one of a slot index, a combination of a frame index and a slot index, and a quantity of slots or a quantity of frames between a time at which the feedback information is sent and the measurement time.

4. The method according to any one of claims 1 to 3, wherein the measurement result of the n^{th} reference signal comprises:
received power of the n^{th} reference signal and/or a signal to interference plus noise ratio of the n^{th} reference signal.

5. The method according to any one of claims 1 to 4, wherein the feedback information further comprises:
a second time of the resource set corresponding to the feedback information, wherein the second time is used to describe a time at which the terminal device starts and/or ends measurement of the resource set corresponding to the feedback information, and the second time comprises at least one of a slot index, a combination of a frame index and a slot index, and a quantity of slots or a quantity of frames between the time at which the feedback information is sent and the measurement start and/or end time.

6. The method according to any one of claims 1 to 5, wherein the feedback information further comprises:
a first identifier, wherein the first identifier indicates a correspondence between the feedback information and the resource set, and the first identifier comprises at least one of a resource set identifier, a reporting identifier corresponding to the resource set, and a trigger state identifier corresponding to the resource set.

7. The method according to any one of claims 1 to 6, wherein the method further comprises:
sending second configuration information to the terminal device, wherein the second configuration information is used to configure that the terminal device reports measurement information of a reference signal before and/or after a beam failure.

8. The method according to claim 7, wherein if a beam recovery request sent by the terminal device is received, the method further comprises:
sending trigger information to the terminal device, wherein the trigger information indicates the terminal device to report the measurement information of the reference signal before and/or after the beam failure.

9. The method according to claim 7, wherein the second configuration information further comprises:
at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device, wherein M is an integer greater than or equal to 1.

10. The method according to claim 8, wherein the trigger information further comprises:
at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device, wherein M is an integer greater than or equal to 1.

11. The method according to claim 8 or 10, wherein the trigger information is beam recovery response information sent by the network device, or indication signaling separately sent by the network device, and the beam recovery response information comprises a field indicating the terminal device to report the measurement information of the reference signal before and/or after the beam failure.

12. The method according to any one of claims 7 to 11, wherein the measurement information of the reference signal before and/or after the beam failure comprises:
at least one of the feedback information corresponding to a resource set corresponding to the reference signal before and/or after the beam failure, beam strength fluctuation information of a resource corresponding to the reference signal before and/or after the beam failure, and deep fading frequency of the resource corresponding to the reference signal before and/or after the beam failure.

13. A communication method, applied to a terminal device and comprising:
receiving first configuration information from a network device, wherein the first configuration information is used to configure that the terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information comprises N information groups, an n^{th} information group in the N information groups comprises a measurement result of an n^{th} reference signal and/or an identifier of a resource corresponding to the n^{th} reference signal, N is an integer greater than or equal to 1, and n∈[1, N]; and
reporting, by the terminal device, the one or more pieces of feedback information.

14. The method according to claim 13, wherein the n^{th} information group in the N information groups further comprises:
a first measurement parameter of the n^{th} reference signal, wherein the first measurement parameter is used to describe a state of the terminal device during measurement of the n^{th} reference signal, the first measurement parameter comprises at least one of receive beam information for measuring the n^{th} reference signal by the terminal device, receive panel information for measuring the n^{th} reference signal by the terminal device, and a scenario identifier for measuring the n^{th} reference signal by the terminal device, and the scenario identifier is used to describe a rotation state and/or a displacement state of the terminal device during the measurement of the reference signal.

15. The method according to claim 13 or 14, wherein the n^{th} information group in the N information groups further comprises:
a first time of the n^{th} reference signal, wherein the first time is used to describe a time at which the terminal device measures the n^{th} reference signal, and the first time comprises at least one of a slot index, a combination of a frame index and a slot index, and a quantity of slots or a quantity of frames between a time at which first feedback information is sent and the measurement time.

16. The method according to any one of claims 13 to 15, wherein the measurement result of the n^{th} reference signal comprises:
received power of the n^{th} reference signal and/or a signal to interference plus noise ratio of the n^{th} reference signal.

17. The method according to any one of claims 13 to 16, wherein the feedback information further comprises:
a second time of the resource set corresponding to the feedback information, wherein the second time is used to describe a time at which the terminal device starts and/or ends measurement of the resource set corresponding to the feedback information, and the second time comprises at least one of a slot index, a combination of a frame index and a slot index, and a quantity of slots or a quantity of frames between the time at which the feedback information is sent and the measurement start and/or end time.

18. The method according to any one of claims 13 to 17, wherein the feedback information further comprises:
a first identifier, wherein the first identifier indicates the resource set corresponding to the feedback information, and the first identifier comprises at least one of a resource set identifier, a reporting identifier corresponding to the resource set, and a trigger state identifier corresponding to the resource set.

19. The method according to any one of claims 13 to 18, wherein the method further comprises:
receiving second configuration information from the network device, wherein the second configuration information is used to configure that the terminal device reports measurement information of a reference signal before and/or after a beam failure.

20. The method according to claim 19, wherein the method further comprises:
receiving trigger information from the network device, and reporting, to the network device, the measurement information of the reference signal before and/or after the beam failure.

21. The method according to claim 19, wherein the second configuration information further comprises:
at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device, wherein M is an integer greater than or equal to 1.

22. The method according to claim 20, wherein the trigger information further comprises:
at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device, wherein M is an integer greater than or equal to 1.

23. The method according to any one of claims 19 to 22, wherein the measurement information of the reference signal before and/or after the beam failure comprises:
at least one of the feedback information corresponding to a resource set corresponding to the reference signal before and/or after the beam failure, beam strength fluctuation information of a resource corresponding to the reference signal before and/or after the beam failure, and deep fading frequency of the resource corresponding to the reference signal before and/or after the beam failure.

24. A communication apparatus, comprising a transceiver unit, wherein
the transceiver unit is configured to send first configuration information to a terminal device, wherein the first configuration information is used to configure that the terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information comprises N information groups, an n^{th} information group in the N information groups comprises a measurement result of an n^{th} reference signal and/or an identifier of a resource corresponding to the n^{th} reference signal, N is an integer greater than or equal to 1, and n∈[1, N]; or the transceiver unit is configured to send first configuration information to a terminal device, wherein the first configuration information is used to configure that the terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information comprises N information groups, an n^{th} information group in the N information groups comprises a measurement result of an n^{th} reference signal and/or an identifier of a resource corresponding to the n^{th} reference signal, N is an integer greater than or equal to 1, and n∈[1, N].

25. The apparatus according to claim 24, wherein the n^{th} information group in the N information groups further comprises:
a first measurement parameter of the n^{th} reference signal, wherein the first measurement parameter is used to describe a terminal state of the terminal device during measurement of the n^{th} reference signal, the first measurement parameter comprises at least one of receive beam information for measuring the n^{th} reference signal by the terminal device, receive panel information for measuring the n^{th} reference signal by the terminal device, and a scenario identifier for measuring the n^{th} reference signal by the terminal device, and the scenario identifier is used to describe a rotation state and/or a displacement state of the terminal device during the measurement of the reference signal.

26. The apparatus according to claim 24 or 25, wherein the n^{th} information group in the N information groups further comprises:
a first time of the n^{th} reference signal, wherein the first time is used to describe a time at which the terminal device measures the n^{th} reference signal, and the first time comprises at least one of a slot index, a combination of a frame index and a slot index, and a quantity of slots or a quantity of frames between a time at which the feedback information is sent and the measurement time.

27. The apparatus according to any one of claims 24 to 26, wherein the measurement result of the n^{th} reference signal comprises:
received power of the n^{th} reference signal and/or a signal to interference plus noise ratio of the n^{th} reference signal.

28. The apparatus according to any one of claims 24 to 27, wherein the feedback information further comprises:
a second time of the resource set corresponding to the feedback information, wherein the second time is used to describe a time at which the terminal device starts and/or ends measurement of the resource set corresponding to the feedback information, and the second time comprises at least one of a slot index, a combination of a frame index and a slot index, and a quantity of slots or a quantity of frames between the time at which the feedback information is sent and the measurement start and/or end time.

29. The apparatus according to any one of claims 24 to 28, wherein the feedback information further comprises:
a first identifier, wherein the first identifier indicates a correspondence between the feedback information and the resource set, and the first identifier comprises at least one of a resource set identifier, a reporting identifier corresponding to the resource set, and a trigger state identifier corresponding to the resource set.

30. The apparatus according to any one of claims 24 to 29, wherein
the transceiver unit is further configured to send second configuration information to the terminal device, wherein the second configuration information is used to configure that the terminal device reports measurement information of a reference signal before and/or after a beam failure.

31. The apparatus according to claim 30, wherein if a beam recovery request sent by the terminal device is received, the transceiver unit is further configured to send trigger information to the terminal device, wherein the trigger information indicates the terminal device to report the measurement information of the reference signal before and/or after the beam failure.

32. The apparatus according to claim 30, wherein the second configuration information further comprises:
at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device, wherein M is an integer greater than or equal to 1.

33. The apparatus according to claim 31, wherein the trigger information further comprises:
at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device, wherein M is an integer greater than or equal to 1.

34. The apparatus according to claim 31 or 33, wherein the trigger information is beam recovery response information sent by a network device, or indication signaling separately sent by the network device, and the beam recovery response information comprises a field indicating the terminal device to report the measurement information of the reference signal before and/or after the beam failure.

35. The apparatus according to any one of claims 30 to 34, wherein the measurement information of the reference signal before and/or after the beam failure comprises:
at least one of the feedback information corresponding to a resource set corresponding to the reference signal before and/or after the beam failure, beam strength fluctuation information of a resource corresponding to the reference signal before and/or after the beam failure, and deep fading frequency of the resource corresponding to the reference signal before and/or after the beam failure.

36. A communication apparatus, comprising a transceiver unit, wherein
the transceiver unit is configured to receive first configuration information from a network device, wherein the first configuration information is used to configure that a terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information comprises N information groups, an n^{th} information group in the N information groups comprises a measurement result of an n^{th} reference signal and/or an identifier of a resource corresponding to the n^{th} reference signal, N is an integer greater than or equal to 1, and n∈[1, N]; and
the transceiver unit is further configured to report the one or more pieces of feedback information.

37. The apparatus according to claim 36, wherein the n^{th} information group in the N information groups further comprises:
a first measurement parameter of the n^{th} reference signal, wherein the first measurement parameter is used to describe a state of the terminal device during measurement of the n^{th} reference signal, the first measurement parameter comprises at least one of receive beam information for measuring the n^{th} reference signal by the terminal device, receive panel information for measuring the n^{th} reference signal by the terminal device, and a scenario identifier for measuring the n^{th} reference signal by the terminal device, and the scenario identifier is used to describe a rotation state and/or a displacement state of the terminal device during the measurement of the reference signal.

38. The apparatus according to claim 36 or 37, wherein the n^{th} information group in the N information groups further comprises:
a first time of the n^{th} reference signal, wherein the first time is used to describe a time at which the terminal device measures the n^{th} reference signal, and the first time comprises at least one of a slot index, a combination of a frame index and a slot index, and a quantity of slots or a quantity of frames between a time at which first feedback information is sent and the measurement time.

39. The apparatus according to any one of claims 36 to 36, wherein the measurement result of the n^{th} reference signal comprises:
received power of the n^{th} reference signal and/or a signal to interference plus noise ratio of the n^{th} reference signal.

40. The apparatus according to any one of claims 36 to 39, wherein the feedback information further comprises:
a second time of the resource set corresponding to the feedback information, wherein the second time is used to describe a time at which the terminal device starts and/or ends measurement of the resource set corresponding to the feedback information, and the second time comprises at least one of a slot index, a combination of a frame index and a slot index, and a quantity of slots or a quantity of frames between the time at which the feedback information is sent and the measurement start and/or end time.

41. The apparatus according to any one of claims 36 to 40, wherein the feedback information further comprises:
a first identifier, wherein the first identifier indicates the resource set corresponding to the feedback information, and the first identifier comprises at least one of a resource set identifier, a reporting identifier corresponding to the resource set, and a trigger state identifier corresponding to the resource set.

42. The apparatus according to any one of claims 36 to 41, wherein
the transceiver unit is further configured to receive second configuration information from the network device, wherein the second configuration information is used to configure that the terminal device reports measurement information of a reference signal before and/or after a beam failure.

43. The apparatus according to claim 42, wherein
the transceiver unit is further configured to: receive trigger information from the network device, and report, to the network device, the measurement information of the reference signal before and/or after the beam failure.

44. The apparatus according to claim 42, wherein the second configuration information further comprises:
at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device, wherein M is an integer greater than or equal to 1.

45. The apparatus according to claim 43, wherein the trigger information further comprises:
at least one of information indicating that the terminal device needs to report the measurement information of the reference signal before and/or after the beam failure, information about a quantity of times of measurement information for latest M times before and/or after the beam failure that is reported by the terminal device, information about a time window length of measurement information that is within a period of time before and/or after the beam failure and that is reported by the terminal device, and a reference signal resource set identifier and/or a reference signal resource identifier before and/or after the beam failure that are/is reported by the terminal device, wherein M is an integer greater than or equal to 1.

46. The apparatus according to any one of claims 42 to 45, wherein the measurement information of the reference signal before and/or after the beam failure comprises:
at least one of the feedback information corresponding to a resource set corresponding to the reference signal before and/or after the beam failure, beam strength fluctuation information of a resource corresponding to the reference signal before and/or after the beam failure, and deep fading frequency of the resource corresponding to the reference signal before and/or after the beam failure.

47. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 23.

48. A chip, comprising a processor, configured to invoke a computer program from a memory and run the computer program, to enable a terminal device on which the chip is installed to perform the method according to any one of claims 1 to 23.

49. A computer program, wherein when the computer program is executed by a communication apparatus, the method according to any one of claims 1 to 23 is implemented.

50. A computer-readable storage medium, wherein
the computer-readable storage medium stores a computer program; and when the computer program is run, a computer is enabled to perform the method according to any one of claims 1 to 23.

51. A communication system, comprising a terminal device and a network device, wherein
the network device sends first configuration information to the terminal device, wherein the first configuration information is used to configure that the terminal device reports one or more pieces of feedback information, the feedback information is used to describe measurement information of N reference signals, each of the N reference signals corresponds to one resource, resources corresponding to the N reference signals belong to a same resource set, each piece of feedback information corresponds to one resource set, the feedback information comprises N information groups, an n^{th} information group in the N information groups comprises a measurement result of an n^{th} reference signal and/or an identifier of a resource corresponding to the n^{th} reference signal, N is an integer greater than or equal to 1, and n∈[1, N]; and
the terminal device reports the one or more pieces of feedback information.
